# EUROPÄISCHE PATENTSCHRIFT

(11) **EP 1 109 663 B1**
(45) Veröffentlichungstag und Bekanntmachung des Hinweises auf die Patenterteilung: **26.11.2003**
(21) Anmeldenummer: 99950523.3
(22) Anmeldetag: 03.09.1999
(51) Int. Cl.: B29D 17/00, B65G 29/00

(54) **VORRICHTUNG FÜR DEN TRANSPORT VON KREISSCHEIBENFÖRMIGEN SUBSTRATEN VON EINER ZUFÜHRSTATION ÜBER MEHRERE ZWISCHENSTATIONEN ZU EINER ENDSTATION**
DEVICE FOR TRANSPORTING CIRCULAR DISK-SHAPED SUBSTRATES FROM A FEEDING STATION TO AN END STATION VIA SEVERAL INTERMEDIATE STATIONS
DISPOSITIF PERMETTANT LE TRANSPORT DES SUBSTRATS EN FORME DE DISQUES RONDS D'UNE STATION D'ALIMENTATION JUSQU'A UNE STATION TERMINALE EN PASSANT PAR PLUSIEURS STATIONS INTERMEDIAIRES

(30) Priorität: 10.09.1998 DE 19841393
(43) Veröffentlichungstag der Anmeldung: 27.06.2001
(73) Patentinhaber: Leybold Systems GmbH, 63450 Hanau (DE)
(72) Erfinder: FUEST, Dietmar, D-55116 Mainz (DE); JANSEN, Erwin, D-63755 Alzenau (DE); WEIL, Alexander, D-55126 Mainz (DE)
(74) Vertreter: Sartorius, Peter, Dipl.-Ing.
(86) Internationale Anmeldenummer: EP9906504
(87) Internationale Veröffentlichungsnummer: WO00015420

(56) Entgegenhaltungen:
- DE-A- 4 408 537
- DE-A- 19 514 037
- DE-C- 19 606 764
- US-A- 5 612 068

## Beschreibung

Die Erfindung betrifft eine Vorrichtung für den Transport von kreisscheibenförmigen Substraten, beispielsweise von Compact Disks, von einer Ausgangs- oder Zuführstation zu einer Endstation, beispielsweise einer Aufnahmespindel, wobei die Zwischenstationen das Bearbeiten, beispielsweise das Beschichten, Lackieren, Trocknen und Kontrollieren bewirken, wozu ein erster Drehtisch mit an diesem befestigten Substratgreifern für den Weitertransport der Substrate von Station zu Station entlang einer Kreisbahn und ein mit Aufnahmespindeln versehener zweiter Drehtisch vorgesehen sind.

Es ist bereits ein Drehtisch mit mehreren in radialer Richtung bewegbaren, an ihrem freien Ende Substratgreifer aufweisenden Transportgliedern bekannt (GB-A 2 250 495). Aus dieser Druckschrift ist jedoch kein Hinweis zu einer Ausgestaltung des Drehtischs mit nur einem Transportglied zu entnehmen.

Bekannt ist eine Vorrichtung (DOS 41 27 341) zum selbsttätigen Gießen, Beschichten, Lackieren, Prüfen und Sortieren von Werkstücken - insbesondere von kreisscheibenförmigen, flachen Substraten aus Kunststoff, wie beispielsweise optischen oder magneto-optischen Datenspeichern - mit mindestens einer die Substrate von einer Herstellstation, beispielsweise einer Spritzgießmaschine, zu den Bearbeitungsstationen weiterbefördernden Transporteinrichtung und mit jeweils einer Ablagestation zur getrennten Ablage von fertig bearbeiteten und als einwandfrei befundenen und von mit Fehlern behafteten Werkstücken, die gekennzeichnet ist durch eine Substrattransporteinrichtung mit einem längs einer geraden Linie hin und her bewegbaren Transportschlitten mit jeweils drei beiderseits des Schlittens angeordneten Transportarmen mit Substrathaltern, einer auf der einen Seite des Transportschlittens vorgesehenen Vakuumbeschichtungsvorrichtung und einer auf der anderen Seite des Transportschlittens angeordneten Ablageeinrichtung mit mindestens je einer Ablage für gut befundene und für auszusondernde Substrate und einer Vorrichtung zur Qualitätsprüfung und mit einer in der Bewegungsrichtung des Transportschlittens der Spritzgießmaschine gegenüberliegend angeordneten Karussell-Transporteinrichtung oder einem Drehtisch mit verschiedenen, an seinen Umfang angeordneten Lackier-, Trocknungs-, Bedruckungs-, Bildkontroll- und Zentriereinrichtungen, wobei der Drehtisch die Substrate in einer Vielzahl von Transportschritten auf einer Kreisbahn um die vertikale Rotationsachse des Drehtisches bewegt und wobei der Transportschlitten bei seiner Bewegung in der einen Richtung mit seinem ersten Arm ein erstes Substrat in einem einzigen Transportschritt von der Übernahmestation der Abgabestation zur Ein- bzw. Ausschleusstation der Vakuumbeschichtungsvorrichtung transportiert und ebenso gleichzeitig mit dem Transportarm ein zweites Substrat von der Beschichtungsstation zu einer Lackierstation und ebenso ein drittes Substrat von der Lackierstation zum Drehtisch bewegt, der sich schrittweise und im gleichen Takt dreht, und wobei der Transportschlitten bei seiner anschließenden Bewegung in entgegengesetzter Richtung ein fertig bearbeitetes Werkstück zur Prüfvorrichtung und ein bereits geprüftes Werkstück von hier aus zur zweiten Ablage transportiert.

Bekannt ist weiterhin eine Vorrichtung für den Transport von Substraten von einer Ausgangsstation über mehrere Prozeßstationen und zurück zu dieser Ausgangsstation (DOS 44 08 537) mit drei mit Substrathaltern versehenen Karussells und fünf Manipulatoren, wobei im Raum zwischen dem dritten Karussell und der Ausgangsstation ein Manipulator angeordnet ist, dessen einer um eine vertikale Achse schwenkbarer Arm während einer Schwenkbewegung ein Substrat vom dritten Karussell zu einer im Schwenkbereich vorgesehenen Sammelstation für fehlerhafte oder einwandfreie Substrate befördert.

Bekannt ist weiterhin eine Transportvorrichtung zur Beförderung von Substraten, zu der eine Ausgangsstation und mehrere in Reihe oder kreisförmig angeordnete Prozeßstationen zur Aufnahme des Substrats gehören, zu denen das Substrat mittels der als Drehtisch ausgebildeten Transportvorrichtung geleitet und dann an eine Aufnahme- und/oder Übergabestation abgegeben wird, wobei die Aufnahme und die Übergabe des Substrats vom Drehtisch mittels antreibbaren Substratgreifern erfolgt (DE 195 14 037), wobei der Drehtisch in einer gleichbleibenden Taktfrequenz angetrieben wird und die Taktfrequenz sich nach der längsten Arbeitszeitdauer einer beliebigen Prozeßstation richtet, wobei das Substrat mittels des drehbar gelagert ausgebildeten Substratgreifers einer oder mehreren außerhalb des Drehtisches vorgesehenen Prozeßstationen bzw. Satelliten-Prozeßstationen und/oder eine Ausgangsstation bzw. einer Ablagestation zugeführt werden kann.

Bekannt ist schließlich eine Vorrichtung für den Transport von flachen Substraten, beispielsweise von Tabletts von und nach verschiedenen Bearbeitungsstationen (GB 2 250 495 A) mit zwei Drehtellern und mit auf diesem angeordneten Stellmotoren mit Stellgliedern, deren freie Enden mit Saugnäpfen versehen sind, wobei die Saugnäpfe die Substrate von einem Zuführförderer übernehmen und dazu jeweils eine geradlinige Hubbewegung in radialer Richtung ausführen, die Substrate danach in den Bereich von Bearbeitungstationen schwenken und die Substrate schließlich an einen Rückförderer abgeben.

Aufgabe der vorliegenden Erfindung ist es, eine Vorrichtung des eingangs genannten Typs so auszubilden, daß sie bei einem minimalen Platzbedarf eine besonders kurze Taktzeit gestattet und einfach im Aufbau ist und einen guten Zugang zu allen Bearbeitungstationen ermöglicht.

Diese Aufgabe wird erfindungsgemäß dadurch gelöst, daß der Drehtisch eine um seine Drehachse pendelnde, dem Bearbeitungszyklus angepaßte Drehbewegung ausführt und dabei die Substrate aufnimmt, transportiert und abgibt, wobei der Drehtisch mit einem in radialer Richtung hin- und herbewegbaren, an seinem freien Ende einen Substratgreifer aufweisenden Transportglied versehen ist, dessen Hubbewegung den Transport des Substrats zu einer Substrataufnahmespindel im Zentrum des zweiten Drehtisches ermöglicht.

Weitere Einzelheiten und Merkmale sind in den Patentansprüchen näher beschrieben und gekennzeichnet.

Die Erfindung läßt die verschiedensten Ausführungsformen zu; eine davon ist rein schematisch in den anhängenden Zeichnungen dargestellt, die eine Vorrichtung für den Transport von Compact Disks in der Draufsicht und in drei verschiedenen Arbeitsphasen zeigt.

Die Vorrichtung besteht im wesentlichen aus einem Drehtisch 3 mit mehreren an seinem radial äußeren Bereich angeordneten, sich radial erstreckenden Armen 2,2',..., mit einem Substratgreifer 4,4',...,14 am jeweils freien Ende jedes Arms 2,2',..., einer Substrat-Zuführstation 5, einem auf der Unterseite des Drehtisches 3 gelagerten, sich längs eines Armes 2 erstreckenden, in etwa radialer Richtung bewegbaren Transportglied 6 und einem zweiten Drehtisch 7 mit sechs auf einer Kreislinie angeordneten, sich jeweils lotrecht erstreckenden Spindeln 8,8',... zur Aufnahme von für gut befundenen Substraten 1,1',... und einer zentralen Spindel 9 zur Aufnahme der als Ausschuß erkannten Substrate 1, 1' ,....

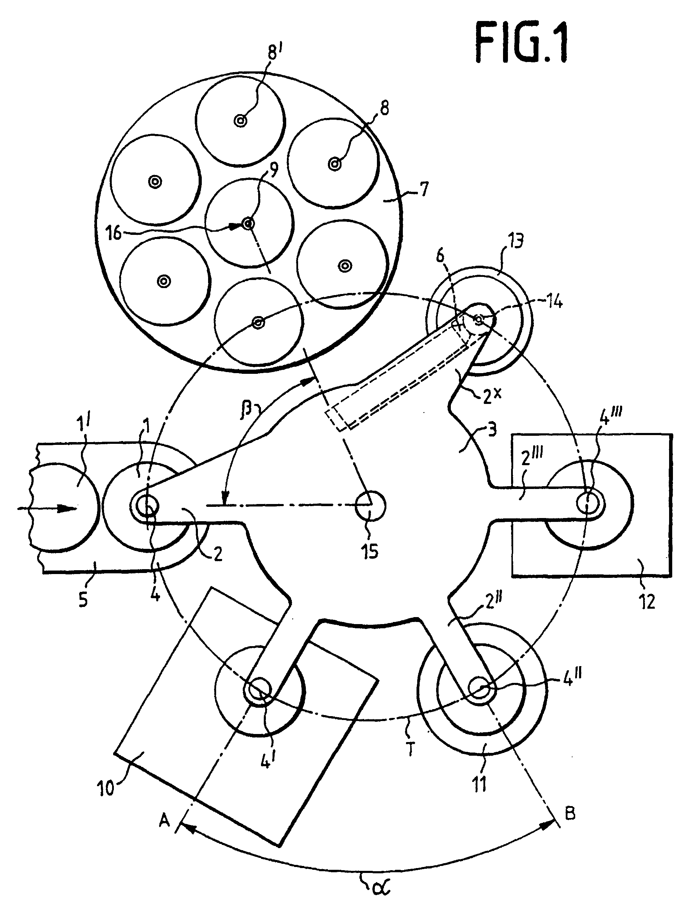

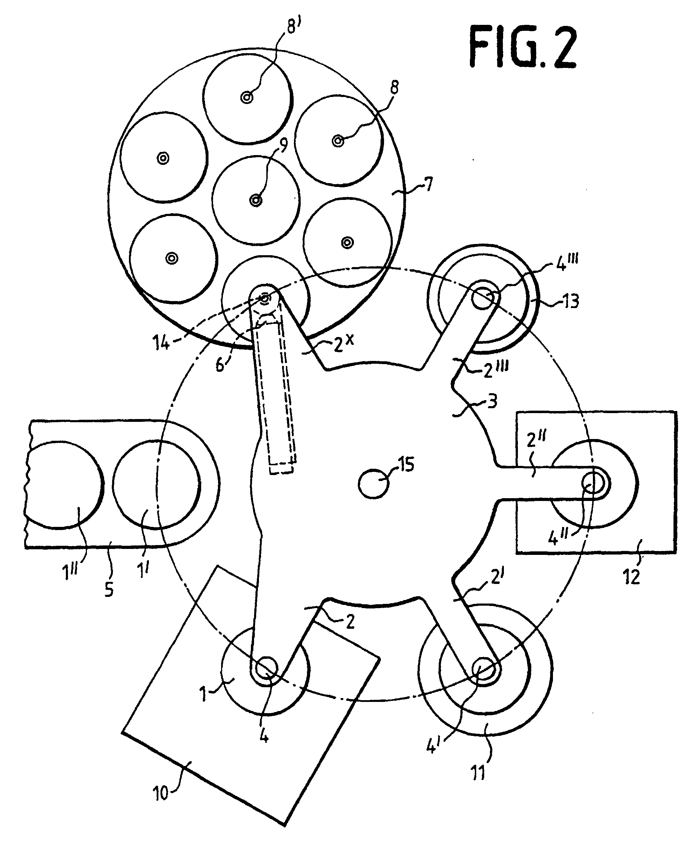

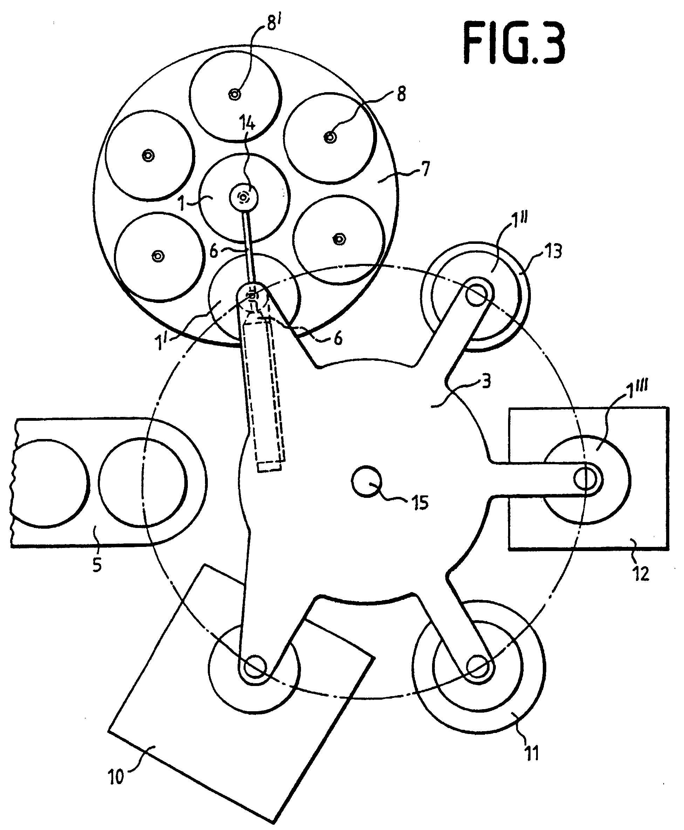

Der Drehtisch 3 wird im Takt der Bearbeitung der Substrate um α = 60° hin- und hergedreht (Richtung A-B), wobei ein von der Zuführstation 5 übernommenes Substrat 1 bei einer ersten Schwenkbewegung von A nach B in den unmittelbaren Bereich der Beschichtungsstation 10, bei der folgenden Drehbewegung von A nach B von der Beschichtungsstation 10 zur Lackierstation 11 und bei der nächstfolgenden Drehbewegung von A nach B von der Lackierstation 11 zur Trockenstation 12 usw. befördert wird, bis das Substrat 1 die Position oberhalb des Drehtisches 7 erreicht hat. Gleichzeitig mit dem Fördern des fertig bearbeiteten Substrats 1 bis über eine Position oberhalb des Drehtellers 7 kann der das Substrat 1 haltende Substratgreifer 14, der am freien Ende des Transportglieds 6 angeordnet ist, das Substrat 1 auf der zentralen Spindel 9 (wie dies Figur 3 zeigt) oder - je nach einem vom Fehler-Prüfgerät 13 erhaltenen Signal - auf einer der Spindeln 8,8' ,... ablegen.

### Bezugszeichenliste

- 1,1', ...: Substrat
- 2,2', ...: Arm
- 3: Drehtisch
- 4,4',...: Substratgreifer
- 5: Zuführstation
- 6: Transportglied
- 7: Drehtisch
- 8,8',...: Aufnahmespindel
- 9: zentrale Spindel
- 10: Beschichtungsstation
- 11: Lackierstation
- 12: Trockenstation
- 13: Fehler-Prüfgerät
- 14: Substratgreifer
- 15: Drehachse
- 16: Drehachse

## Patentansprüche

1. Vorrichtung für den Transport von. kreisscheibenförmiaen Substraten (1, 1',...), beispielsweise von Compact Disks, von einer Ausgangs- oder Zuführstation (5) über mehrere Zwischenstationen (10, 11, 12, 13) zu einer Endstation, beispielsweise einer Aufnahmespindel (8, 8', ... bzw. 9), wobei die Zwischenstationen das Bearbeiten, beispielsweise das Beschichten, Lackieren, Trocknen und Kontrollieren bewirken, wozu ein erster Drehtisch (3) mit an diesem befestigten Substratgreifern (4, 4', ...) für den Weitertransport der Substrate (1, 1', ...) von Station zu Station entlang einer Kreisbahn (T) und ein mit Aufnahmespindeln (8, 8', ..., 9) versehener zweiter Drehtisch vorgesehen sind, **dadurch gekennzeichnet, daß** der Drehtisch (3) eine um seine Drehachse (15) pendelnde, dem Bearbeitungszyklus angepaßte Drehbewegung ausführt und dabei die Substrate (1, 1', ...) aufnimmt, transportiert und abgibt, wobei der Drehtisch (3) mit einem in radialer Richtung bewegbaren, an seinem freien Ende einen Substratgreifer (14) aufweisenden Transportglied (6) versehen ist, dessen Hubbewegung den Transport des Substrats (1, 1', ...) zu einer Substrataufnahmespindel (9) im Zentrum des zweiten Drehtisches (7) ermöglicht.

2. Vorrichtung nach Anspruch 1, **dadurch gekennzeichnet, daß** die Pendelbewegung des ersten Drehtisches (3) um einen Drehwinkel von etwa α = 60° erfolgt, wobei um die Drehachse (15) des Drehtisches in jeweils gleichem Abstand von der Drehachse (15) eine Zuführstation (5), die Bearbeitungsstationen (10, 11, 12), ein Abtaster oder Fehler-Prüfgerät (13) und eine Spindel (8) des zweiten Drehtellers (7) angeordnet sind.

3. Vorrichtung nach den Ansprüchen 1 und 2, **dadurch gekennzeichnet, daß** die am radial äußeren Bereich des Drehtellers (3) befestigten Substratgreifer (4, 4', ...) und der mit dem Transportglied (6) fest verbundene Greifer (14) jeweils das Substrat (1, 1', ...) aufnehmen, wenn sich der erste Drehteller (3) in seiner ersten Position (A) befindet, und jeweils das Substrat ablegen, wenn der Drehteller seine Drehbewegung bis in die zweite Position (B) ausgeführt hat.

4. Vorrichtung nach Anspruch 1, **dadurch gekennzeichnet, daß** der Drehpunkt (16) des zweiten Drehtisches (7) mit der Längsachse der zentralen Spindel (9) für die Aufnahme der aussortierten Substrate (1, 1', ...) zusammenfällt und einen Winkel (β) mit dem Drehpunkt (15) des ersten Drehtellers (3) und der benachbarten Zuführstation (5) einschließt, der größer bemessen ist als der Winkel (α) der Pendelbewegung, wobei das Transportglied (6) sich längs einer geraden Linie bewegt, die die auf der Kreislinie (T) angeordnete Ausgangsstellung für den Substratgreifer (14) mit dem Drehpunkt (16) des zweiten Drehtisches (7) verbindet.

## Claims

1. A device for transporting circular disk-shaped substrates (1, 1', ...), for example, compact disks, from a starting or feed station (5) via a plurality of intermediate stations (10, 11, 12, 13) to an end station, for example, a take-up spindle (8, 8', ..., 9), wherein the intermediate stations effect the processing, for example, the coating, varnishing, drying and checking, for which there is provided a first rotary table (3) with substrate grippers (4, 4', ...) affixed thereto for further transport of the substrates (1, 1', ...) from station to station along a circular track (T) and a second rotary table provided with take-up spindles (8, 8', ..., 9), **characterised in that** said rotary table (3) executes a swinging rotational movement about its axis of rotation (15) matched to the processing cycle and there takes up, transports and deposits the substrates (1, 1', ...), wherein the rotary table (3) is provided with a transport member (6) moveable in the radial direction, having a substrate gripper (14) at its free end, whose lifting movement makes possible the transport of the substrate (1, 1', ...) to a substrate take-up spindle (9) at the centre of the second rotary table (7).

2. The device according to claim 1, **characterised in that** the swinging movement of the first rotary table (3) takes place through an angle of rotation of approximately α = 60°, wherein a feed station (5), the processing stations (10, 11, 12), a scanner or defect testing device (13) and a spindle (8) of the second rotary table (7) are arranged about the axis of rotation (15) of the rotary table at respectively the same distance from the rotary table (15).

3. The device according to claims 1 and 2, **characterised in that** the substrate gripper (4, 4', ...) affixed to the radially outer region of the rotary table (3) and the gripper (14) fixedly connected to the transport member (6) respectively take up the substrate (1, 1', ...) when the first rotary table (3) is located in its first position (A), and respectively deposits the substrate when the rotary table has executed its rotary movement into the second position (B).

4. The device according to claim 1, **characterised in that** the centre of rotation(16) of the second rotary table (7) coincides with the longitudinal axis of the central spindle (9) for take up of the sorted substrates (1, 1', ...) and encloses an angle (β) with the centre of rotation (15) of the first rotary table (3) and the neighbouring feed station (5), that is larger than the angle (α) of the swinging movement wherein the transport member (6) moves along a straight line which connects the starting position for the substrate gripper (14) arranged on the circular line (T) with the centre of rotation (16) of the second rotary table (7).

## Revendications

1. Dispositif pour le transport de substrats (1, 1', ...) en forme de disques ronds, par exemple de disques compacts, depuis une station de départ ou d'alimentation (5), via plusieurs stations intermédiaires (10, 11, 12, 13) jusqu'à une station terminale telle par exemple une broche réceptrice (8, 8', ... et/ou 9), où les stations intermédiaires provoquent l'usinage, par exemple l'enrobement, le laquage, le séchage et le contrôle, une première table tournante (3) étant prévue à cet effet avec des griffes à substrats (4, 4', ...) fixées dessus pour la poursuite du transport des substrats (1, 1', ...) de station en station le long d'une trajectoire circulaire (T), ainsi qu'une seconde table tournante pourvue de broches réceptrices (8, 8', ..., 9), **caractérisé en ce que** la table tournante (3) exécute un mouvement de rotation pendulaire autour de son axe de rotation (15), lequel est adapté au cycle d'usinage, tout en réceptionnant les substrats (1, 1', ...), les transportant et les délivrant, moyennant quoi la table tournante (3) est pourvue d'un élément de transport (6) pouvant être bougé en direction radiale et présentant sur son extrémité libre une griffe à substrat (14), et dont le mouvement d'élévation rend possible le transport du substrat (1, 1', ... ) vers une broche de réception du substrat (9) au centre de la seconde table tournante (7).

2. Dispositif selon la revendication 1, **caractérisé en ce que** le mouvement pendulaire de la première table tournante (3) s'effectue avec un angle de rotation d'environ α = 60°, moyennant quoi sont aménagés autour de l'axe de rotation (15) de la table tournante, respectivement à égale distance de l'axe de rotation (15), une station d'alimentation (5), les stations d'usinage (10, 11, 12), un analyseur ou un appareil de contrôle des erreurs (13) et une broche (8) du second plateau tournant (7).

3. Dispositif selon les revendications 1 et 2, **caractérisé en ce que** les griffes à substrats (4, 4', ...) fixées sur la zone radiale extérieure du plateau tournant (3) et la griffe (14) reliée de manière serrée avec l'élément de transport (6), réceptionnent respectivement le substrat (1, 1', ...) lorsque le premier plateau tournant (3) se trouve dans sa première position (A), et déposent respectivement le substrat lorsque le plateau tournant a exécuté son mouvement de rotation jusqu'à atteindre la seconde position (B).

4. Dispositif selon la revendication 1, **caractérisé en ce que** le centre de rotation (16) de la seconde table tournante (7) coïncide avec l'axe longitudinal de la broche centrale (9) pour la réception des substrats (1, 1', ...) sélectionnés, et renferme un angle (β) avec le centre de rotation (15) du premier plateau tournant (3) et la station d'alimentation (5) voisine, lequel est dimensionné de sorte à être supérieur à l'angle (α) du mouvement pendulaire, moyennant quoi l'élément de transport (6) bouge le long d'une ligne droite reliant la position de départ aménagée sur la ligne circulaire (T) pour la griffe à substrat (14) au centre de rotation (16) de la seconde table tournante (7) .
